# EUROPÄISCHE PATENTSCHRIFT

(11) **EP 3 193 561 B1**
(45) Veröffentlichungstag und Bekanntmachung des Hinweises auf die Patenterteilung: **27.12.2017**
(21) Anmeldenummer: 17000010.3
(22) Anmeldetag: 04.01.2017
(51) Int. Cl.: H05B 3/00, H05B 3/14, H05B 3/20, H05B 3/84, H05B 3/86, B60R 11/04, G03B 17/55, H05B 3/16, H05B 3/26, G02B 5/00, H04N 5/225, B60R 11/00, G02B 27/00

(54) **STREULICHTBLENDE EINES BILDERFASSUNGSGERÄTES**
LENS HOOD OF AN IMAGE RECORDING DEVICE
PARE-SOLEIL D'UN SYSTÈME IMAGEUR

(30) Priorität: 14.01.2016 DE 102016000269
(43) Veröffentlichungstag der Anmeldung: 19.07.2017
(73) Patentinhaber: K.L. Kaschier- und Laminier GmbH, 48455 Bad Bentheim-Gildehaus (DE)
(72) Erfinder: Schulze Wehninck, Rembert, 81667 München (DE)
(74) Vertreter: Cohausz Hannig Borkowski Wißgott

(56) Entgegenhaltungen:
- EP-A2- 2 199 063
- WO-A1-2013/131700
- DE-A1-102010 052 472
- US-A- 3 694 622

## Beschreibung

Die Erfindung betrifft eine Streulichtblende eines auf der Rückseite einer Kraftfahrzeugwindschutzscheibe angeordneten Bilderfassungsgerätes mit einem flachen Heizelement, das am Boden der Streulichtblende angeordnet ist, wobei das Heizelement auf der der Windschutzscheibe zugewandten Vorderseite des Bodens der Streulichtblende angeordnet ist.

Aus der DE 10 2014 006 923 A1 ist eine Streulichtblende der eingangs genannten Art bekannt, bei der das Heizelement in einem Abstand unterhalb der Oberfläche des Bodens angeordnet ist, die die Streulicht auffangende Struktur bildet. Dies führt dazu, dass eine ungleichmäßige Wärmeverteilung entsteht und eine verhältnismäßig hohe Energie erforderlich ist, um ein Beschlagen oder eine Vereisung zu verhindern.

Ferner sind aus der WO 2013/131700 A1 und der DE 10 2010 052 472 A1 Streulichtblenden für Bilderfassungsgeräte bekannt, bei denen auf der Oberseite der Streulichtblende eine beheizbare Fläche befestigt ist.

Aufgabe der Erfindung ist es, eine Streulichtblende der eingangs genannten Art so zu verbessern, dass bei einfacher Herstellung eine gleichmäßige Wärmeverteilung bei hohem Wirkungsgrad erzeugt wird.

Diese Aufgabe wird erfindungsgemäß dadurch gelöst, dass das Heizelement im Boden der Streulichtblende eingelassen ist, so dass das Heizelement die vorderseitige Oberfläche des Bodens vollständig oder zumindest teilweise bildet.

Eine in dieser Weise aufgebaute Streulichtblende erzeugt aufgrund des Heizelements in der Oberseite des Bodens eine sehr gleichmäßige Wärmeverteilung. Die Wärme wird exakt dort erzeugt, wo ein Beschlagen oder eine Vereisung unbedingt verhindert werden muss. Und dies bei einem geringen Energieaufwand.

Hierzu wird auch vorgeschlagen, dass die der Windschutzscheibe zugewandte Oberfläche des Bodens der Streulichtblende eine Streulicht auffangende Struktur aufweist und die Oberfläche des Heizelements als Teil des Bodens die Struktur zumindest teilweise bildet.

Von Vorteil ist, wenn die Heizleistung und die Wärmeverteilung des flachen Heizelements über seine gesamte Fläche gleichmäßig ist.

Besonders vorteilhaft ist es, wenn das flache Heizelement als Wärmeerzeuger eine homogene, elektrisch leitfähige Kunststoffschicht oder Kunststofffolie mit leitfähigen Partikeln aufweist. Hierbei sollte die heizende leitfähige Schicht oder Folie des Heizelements eine Stärke von 60 bis 150 µm aufweisen. Besonders vorteilhaft ist es hierbei auch, wenn die heizende leitfähige Folie des Heizelements gelocht oder geschlitzt ist.

Eine sichere Führung der Wärme zur Vorderseite der Streulichtblende wird erreicht, wenn die Rückseite der heizenden leitfähigen Schicht oder Folie des Heizelements mit einer wärmeisolierenden Schicht oder Folie abgedeckt ist. Hierbei kann die wärmeisolierende Schicht eine Schaumstoffschicht sein.

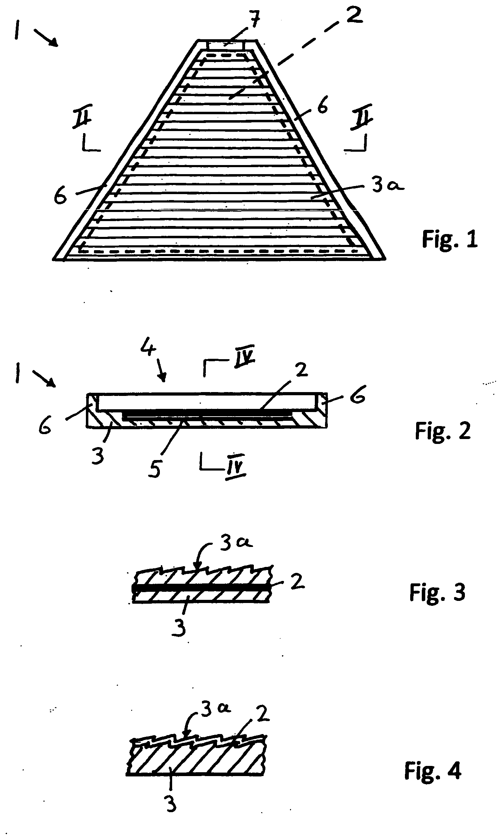

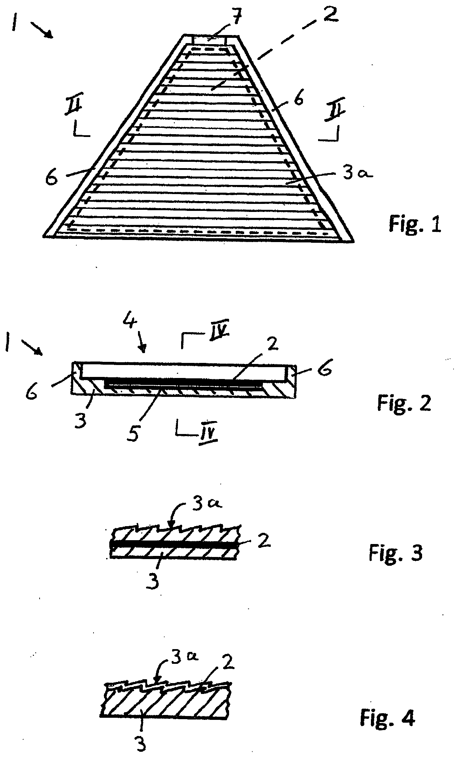

Vorzugsweise wird vorgeschlagen, dass die heizende leitfähige Schicht oder Folie des Heizelements einseitig mit einer Abdeckfolie bedeckt insbesondere beklebt ist. Dabei kann die Abdeckfolie eine elektrisch isolierende TPU-Folie sein. Hierbei kann die TPU-Folie eine das Streulicht auffangende Struktur aufweisen. Auch ist hierbei von Vorteil, wenn die der heizenden Schicht zugewandte Seite der Abdeckfolie eine Klebstoffschicht trägt.
Vorzugsweise wird vorgeschlagen, dass die an dem Heizelement seitlich angeordneten Stromzuführungselektroden zueinander schräg oder parallel angeordnet sind. Eine gleichmäßige Wärmeverteilung bei geringem Energieaufwand wird auch dann erreicht, wenn das Heizelement die Form eines gleichschenkligen Trapezes aufweist.
Ausführungsbeispiele der Erfindung sind in den Zeichnungen dargestellt und werden im Folgenden näher beschrieben. Es zeigen
- Fig. 1: eine Draufsicht auf die Streulichtblende,
- Fig. 2: einen Schnitt nach II-II in Fig. 1,
- Fig. 3: einen Schnitt nach IV-IV in Fig. 2 mit einem im Boden der Streulichtblende eingelassenen Heizelement und
- Fig. 4: einen Schnitt nach IV-IV in Fig. 2 mit einem auf der Oberseite angeordneten Heizelement, so dass das Heizelement selber die die Streulicht auffangende Struktur bildet.
Die Streulichtblende 1 weist einen Boden 3 in Form eines gleichschenkligen Trapezes auf, an dessen zwei Seiten jeweils ein Seitenrand 6 vorsteht, wobei die beiden Seitenränder einander nähernd zu einer Öffnung 7 zulaufen, in der das Objektiv einer Kamera angeordnet ist. Hierbei nimmt die Höhe der Seitenränder 6 zur Öffnung 7 hin zu. Alternativ kann die Streulichtblende aber auch eine andere Form insbesondere eine Rechteckform aufweisen.
Im Boden 3 der Streulichtblende ist ein Heizelement 2 auf der der Windschutzscheibe zugewandten Vorderseite 4 des Bodens 3 eingelassen. Die Oberfläche 3a des Bodens 3 bildet die die Streulicht auffangende Struktur des Bodens 3, wobei das Heizelement 2 die vorderseitige Oberfläche des Bodens bildet, so dass die Oberfläche des Heizelements als Teil des Bodens die Struktur selber bildet. Dies ist in Fig. 4 dargestellt. Die Struktur ist vorzugsweise von parallelen Rillen oder Wülsten insbesondere mit Sägezahnquerschnitt gebildet.

Das Heizelement 2 weist über seine gesamte Fläche eine gleichmäßige Heizleistung und damit eine gleichmäßige Wärmeverteilung auf. Dies wird auch dadurch erreicht, dass das flache Heizelement 2 als Wärmeerzeuger eine homogene, elektrisch leitfähige Kunststoffschicht oder Kunststofffolie mit leitfähigen Partikeln aufweist.

Die heizende leitfähige Schicht oder Folie des Heizelements 2 weist eine Stärke von 60 bis 150 µm auf. Hierbei ist die heizende leitfähige Folie gelocht oder geschlitzt. Dies hat den Vorteil, dass die Oberflächenstruktur variabel ist und Verbauhilfen (Clips, Haltebolzen, etc.) berücksichtigt werden können.

Um sicherzustellen, dass die durch das Heizelement erzeugte Wärmeenergie nur zur Windschutzscheibe hin weitgehend abgegeben wird, ist die Rückseite der heizenden leitfähigen Schicht oder Folie des Heizelements 2 mit einer wärmeisolierenden Schicht oder Folie 5 abgedeckt. In einer Ausführung bildet eine Schaumstoffschicht die wärmeisolierende Schicht.

Herstellung und Montage werden erleichtert, wenn die heizende leitfähige Schicht oder Folie des Heizelements 2 einseitig mit einer Abdeckfolie bedeckt insbesondere beklebt ist. Hierbei kann die Abdeckfolie eine elektrisch isolierende TPU-Folie sein. Hierbei kann die TPU-Folie eine das Streulicht auffangende Struktur aufweisen. Auch trägt in einer weiteren Ausführung die der heizenden Schicht zugewandte Seite der Abdeckfolie eine Klebstoffschicht.

Die an dem Heizelement seitlich angeordneten, in den Zeichnungen nicht dargestellten Stromzuführungselektroden sind entsprechend der aufeinander zulaufenden Seitenränder 6 schräg angeordnet. Diese Stromzuführungselektroden bestehen insbesondere aus Kuper, Silber oder versilbertem Kupfer.

Um möglichst weitgehend den Boden 3 durch das Heizelement 2 zu erwärmen, weist das Heizelement die gleiche gleichschenklige Trapezform oder Rechteckform auf wie der Boden 3 der Streulichtblende.

## Patentansprüche

1. Streulichtblende (1) eines auf der Rückseite einer Kraftfahrzeugwindschutzscheibe angeordneten Bilderfassungsgerätes mit einem flachen Heizelement (2), das an dem von einem Seitenrand (6) begrenzten Boden (3) der Streulichtblende angeordnet ist, wobei das Heizelement (2) auf der der Windschutzscheibe zugewandten Vorderseite (4) des Bodens (3) der Streulichtblende angeordnet ist, **dadurch gekennzeichnet, dass** das Heizelement (2) im Boden (3) der Streulichtblende eingelassen ist, so dass das Heizelement die vorderseitige Oberfläche des Bodens vollständig oder zumindest teilweise bildet.

2. Streulichtblende nach Anspruch 1, **dadurch gekennzeichnet, dass** die der Windschutzscheibe zugewandte Oberfläche (3a) des Bodens (3) der Streulichtblende (1) eine Streulicht auffangende Struktur aufweist und die Oberfläche des Heizelements als Teil des Bodens die Struktur zumindest teilweise bildet.

3. Streulichtblende nach einem der vorherigen Ansprüche, **dadurch gekennzeichnet, dass** die Heizleistung und die Wärmeverteilung des flachen Heizelements (2) über seine gesamte Fläche gleichmäßig ist.

4. Streulichtblende nach einem der vorherigen Ansprüche, **dadurch gekennzeichnet, dass** das flache Heizelement (2) als Wärmeerzeuger eine homogene, elektrisch leitfähige Kunststoffschicht oder Kunststofffolie mit leitfähigen Partikeln aufweist.

5. Streulichtblende nach Anspruch 4, **dadurch gekennzeichnet, dass** die heizende leitfähige Schicht oder Folie des Heizelements (2) eine Stärke von 60 bis 150 µm aufweist.

6. Streulichtblende nach einem der Ansprüche 4 oder 5, **dadurch gekennzeichnet, dass** die heizende leitfähige Folie des Heizelements (2) gelocht oder geschlitzt ist.

7. Streulichtblende nach einem der Ansprüche 4 bis 6, **dadurch gekennzeichnet, dass** die Rückseite der heizenden leitfähigen Schicht oder Folie des Heizelements (2) mit einer wärmeisolierenden Schicht oder Folie (5) abgedeckt ist.

8. Streulichtblende nach Anspruch 7, **dadurch gekennzeichnet, dass** die wärmeisolierende Schicht eine Schaumstoffschicht ist.

9. Streulichtblende nach einem der Ansprüche 4 bis 8, **dadurch gekennzeichnet, dass** die heizende leitfähige Schicht oder Folie des Heizelements (2) einseitig mit einer Abdeckfolie bedeckt insbesondere beklebt ist.

10. Streulichtblende nach Anspruch 9, **dadurch gekennzeichnet, dass** die Abdeckfolie eine elektrisch isolierende TPU-Folie ist.

11. Streulichtblende nach Anspruch 10, **dadurch gekennzeichnet, dass** die TPU-Folie eine das Streulicht auffangende Struktur aufweist.

12. Streulichtblende nach einem der Ansprüche 9 bis 11, **dadurch gekennzeichnet, dass** die der heizenden Schicht zugewandte Seite der Abdeckfolie eine Klebstoffschicht trägt.

13. Streulichtblende nach einem der vorherigen Ansprüche, **dadurch gekennzeichnet, dass** die an dem Heizelement (2) seitlich angeordneten Stromzuführungselektroden zueinander schräg angeordnet sind.

14. Streulichtblende nach einem der vorherigen Ansprüche, **dadurch gekennzeichnet, dass** die an dem Heizelement (2) seitlich angeordneten Stromzuführungselektroden aus Kupfer, Silber oder versilbertem Kupfer bestehen.

15. Streulichtblende nach einem der vorherigen Ansprüche, **dadurch gekennzeichnet, dass** das Heizelement (2) und/oder der Boden (3) des Heizelements die Form eines gleichschenkligen Trapezes aufweist.

## Claims

1. Lens hood (1) of an image recording device arranged on the rear side of a motor vehicle windscreen, comprising a flat heating element (2) which is arranged on the base (3) of the lens hood, which is bounded by a side edge (6), the heating element (2) being arranged on the front side (4) of the base (3) of the lens hood, facing the windscreen,
**characterized in that** the heating element (2) is let into the base (3) of the lens hood, so that the heating element fully or at least partly forms the front-side surface of the base.

2. Lens hood according to Claim 1, **characterized in that** the surface (3a) of the base (3) of the lens hood (1) that faces the windscreen has a structure that intercepts scattered light, and the surface of the heating element, as part of the base, at least partly forms the structure.

3. Lens hood according to one of the preceding claims, **characterized in that** the heating power and the heat distribution of the flat heating element (2) are uniform over its entire area.

4. Lens hood according to one of the preceding claims, **characterized in that** the flat heating element (2), as heat generator, has a homogenous, electrically conductive plastic layer or plastic film with conductive particles.

5. Lens hood according to Claim 4, **characterized in that** the heating conductive layer or film of the heating element (2) has a thickness of 60 to 150 µm.

6. Lens hood according to one of Claims 4 and 5, **characterized in that** the heating conductive film of the heating element (2) is perforated or slit.

7. Lens hood according to one of Claims 4 to 6, **characterized in that** the rear side of the heating conductive layer or film of the heating element (2) is covered with a thermally insulating layer or film (5).

8. Lens hood according to Claim 7, **characterized in that** the thermally insulating layer is a foam layer.

9. Lens hood according to one of Claims 4 to 8, **characterized in that** the heating conductive layer or film of the heating element (2) is covered on one side, in particular coated, with a covering film.

10. Lens hood according to Claim 9, **characterized in that** the covering film is an electrically insulating TPU film.

11. Lens hood according to Claim 10, **characterized in that** the TPU film has a structure intercepting the scattered light.

12. Lens hood according to one of Claims 9 to 11, **characterized in that** the side of the covering film that faces the heating layer bears an adhesive layer.

13. Lens hood according to one of the preceding claims, **characterized in that** the current supply electrodes arranged at the sides on the heating element (2) are arranged obliquely in relation to one another.

14. Lens hood according to one of the preceding claims, **characterized in that** the current supply electrodes arranged at the sides on the heating element (2) consist of copper, silver or silvered copper.

15. Lens hood according to one of the preceding claims, **characterized in that** the heating element (2) and/or the base (3) of the heating element have the form of an equilateral trapezium.

## Revendications

1. Pare-soleil (1) d'un appareil de capture d'image placé sur la face arrière d'un pare-brise de véhicule automobile, avec un élément chauffant (2) plat qui est placé sur le fond inférieur (3) du pare-soleil qui est délimité par un bord latéral (6), l'élément chauffant (2) étant placé sur la face avant (4) qui est dirigée vers le pare-brise du fond inférieur (3) du pare-soleil, **caractérisé en ce que** l'élément chauffant (2) est noyé dans le fond inférieur (3) du pare-soleil, de sorte que l'élément chauffant forme en totalité ou au moins partiellement la surface avant du fond inférieur.

2. Pare-soleil selon la revendication 1, **caractérisé en ce que** la surface (3a) du fond inférieur (3) du pare-soleil (1) qui est dirigée vers le pare-brise comporte une structure absorbant la lumière diffuse et la surface de l'élément chauffant en tant que partie du fond inférieur, forme au moins partiellement la structure.

3. Pare-soleil selon l'une quelconque des revendications précédentes, **caractérisé en ce que** la puissance de chauffe et la distribution thermique de l'élément chauffant (2) plat sont régulières sur l'ensemble de sa surface.

4. Pare-soleil selon l'une quelconque des revendications précédentes, **caractérisé en ce qu'**en tant que générateur de chaleur, l'élément chauffant (2) plat comporte une couche de matière plastique ou un film en matière plastique homogène, conductrice (conducteur) d'électricité avec des particules conductrices.

5. Pare-soleil selon la revendication 4, **caractérisé en ce que** la couche chauffante conductrice ou le film chauffant conducteur de l'élément chauffant (2) présente une épaisseur de 60 à 150 µm.

6. Pare-soleil selon l'une quelconque des revendications 4 ou 5, **caractérisé en ce que** le film chauffant conducteur de l'élément chauffant (2) est perforé ou entaillé.

7. Pare-soleil selon l'une quelconque des revendications 4 à 6, **caractérisé en ce que** la face arrière de la couche chauffante conductrice ou du film chauffant conducteur de l'élément chauffant (2) est recouverte d'une couche ou d'un film (5) isolant(e) thermique.

8. Pare-soleil selon la revendication 7, **caractérisé en ce que** la couche isolante thermique est une couche de mousse synthétique.

9. Pare-soleil selon l'une quelconque des revendications 4 à 8, **caractérisé en ce que** la couche chauffante conductrice ou le film chauffant conducteur de l'élément chauffant (2) est recouvert unilatéralement, notamment par collage d'un film de couverture.

10. Pare-soleil selon la revendication 9, **caractérisé en ce que** le film de couverture est un film TPU isolant électrique.

11. Pare-soleil selon la revendication 10, **caractérisé en ce que** le film TPU comporte une structure absorbant la lumière diffuse.

12. Pare-soleil selon l'une quelconque des revendications 9 à 11, **caractérisé en ce que** la face du film de couverture qui est dirigée vers la couche chauffante porte une couche d'agent adhésif.

13. Pare-soleil selon l'une quelconque des revendications précédentes, **caractérisé en ce que** les électrodes d'alimentation électrique placées latéralement sur l'élément chauffant (2) sont placées en diagonale les unes des autres.

14. Pare-soleil selon l'une quelconque des revendications précédentes, **caractérisé en ce que** les électrodes d'alimentation électrique placées latéralement sur l'élément chauffant (2) sont en cuivre, en argent ou en cuivre argenté.

15. Pare-soleil selon l'une quelconque des revendications précédentes, **caractérisé en ce que** l'élément chauffant (2) et/ou le fond inférieur (3) de l'élément chauffant présente la forme d'un trapèze à côtés égaux.
